(19) Europäisches Patentamt
European Patent Office
Office européen des brevets

(11) Veröffentlichungsnummer : **0 081 458**
**B1**

(12) # EUROPÄISCHE PATENTSCHRIFT

(45) Veröffentlichungstag der Patentschrift : **07.05.86**

(51) Int. Cl.⁴ : **C 07 F 7/22**, C 07 C149/22// C08K5/57

(21) Anmeldenummer : **82810510.6**

(22) Anmeldetag : **29.11.82**

(54) **Kontinuierliches Verfahren zur Herstellung von Alkylzinnthiocarbonsäureestern.**

(30) Priorität : **04.12.81 CH 7772/81**
**26.01.82 CH 468/82**

(43) Veröffentlichungstag der Anmeldung : **15.06.83 Patentblatt 83/24**

(45) Bekanntmachung des Hinweises auf die Patenterteilung : **07.05.86 Patentblatt 86/19**

(84) Benannte Vertragsstaaten : **BE DE FR GB IT NL**

(56) Entgegenhaltungen :
**EP-A- 0 032 106**
**DE-B- 2 209 336**
**US-A- 3 716 568**
**HOUBEN-WEYL "Methoden der organischen Chemie", 4. Auflage, Band XIII/6, 1978, GEORG THIEME VERLAG, Stuttgart, Seiten 348-350**

(73) Patentinhaber : **CIBA-GEIGY AG**
**Klybeckstrasse 141**
**CH-4002 Basel (CH)**

(72) Erfinder : **Maul, Rudolf, Dr.**
**Chrodegangstrasse 6a**
**D-6143 Lorsch/Hessen (DE)**
Erfinder : **Stephan, Hans**
**Jakobsweg 89**
**D-6140 Bensheim (DE)**
Erfinder : **Wolf, Walter, Dr.**
**Nauwiese 18**
**D-6147 Lautertal 1 (DE)**

**EP 0 081 458 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Der Anmeldungsgegenstand betrifft ein kontinuierliches Verfahren zur Herstellung von Alkylzinnmercaptocarbonsäureestern.

Alkylzinnmercaptocarbonsäureester stellen bekannte Stabilisatoren für Homo- und zahlreiche Copolymerisate des Vinylchlorids dar.

Ihre Herstellung ist beispielsweise in Houben-Weyl, Methoden der organischen Chemie, Band XIII/6 (1978), S. 348-350, beschrieben. Sie erfolgt durch diskontinuierliche Umsetzung von Alkylzinnoxiden oder Alkylzinnhalogeniden, insbesondere Alkylzinnchloride, mit Thiocarbonsäureestern.

Die Umsetzung mit Alkylzinnchlorid wird vorzugsweise in Gegenwart einer Base als Säureakzeptor bei verschiedenen Temperatur-, Zeit- und pH-Bedingungen durchgeführt.

Die Herstellung von Alkylzinnmercaptocarbonsäureestern aus den entsprechenden Alkylzinnhalogeniden wird im allgemeinen in Gegenwart eines organischen Lösungsmittels durchgeführt, wie es beispielsweise in US-PS 2 832 751 beschrieben ist. Es ist weiterhin aus der Literatur bekannt, die Umsetzung ohne Lösungsmittel durchzuführen (vgl. diesbezüglich US-PS 3 716 568).

Bei den batchweisen Verfahren unter Verwendung von organischen Lösungsmitteln ist es möglich, die Umsetzung sowohl bei relativ niedrigen als auch bei höheren Temperaturen durchzuführen. Dabei erfolgt meistens eine gute, saubere Abtrennung der wässrigen Phase von der Produkte-Phase.

Die ohne Lösungsmittel durchgeführten Verfahren zeichnen sich durch eine höhere Raum-Zeit-Ausbeute aus.

Ferner erübrigt sich hier die Regenerationsstufe des Lösungsmittels.

Die wesentlichen Nachteile der mit organischen Lösungsmitteln durchgeführten Verfahren bestehen darin, dass die Raum-Zeit-Ausbeute drastisch erniedrigt wird und das eingesetzte Lösungsmittel in der Aufarbeitungsphase durch Destillation entfernt werden muss, was Energie kostet und zur Abluft- und Abwasserbelastung führt. Ausserdem sinkt dabei der Flammpunkt des Produktes wegen der Lösungsmittel-Restbestände in beträchtlicher Weise, was besonders im Betrieb grössere Sicherheitsvorrichtungen erfordert.

Bei den lösungsmittelfreien Verfahren dagegen stellt die Abwesenheit des Lösungsmittels einen Nachteil dar, indem sich daraus meist eine sehr schlechte Phasentrennung der organischen Produkte-Phase von der wässrigen Phase ergibt. Dies bedeutet lange Standzeiten sowie Produkte-Verlust durch die Bildung einer Zwischenphase. Ausserdem werden lange Destillationszeiten für das restliche Wasser durch dessen erschwerte Abtrennung von der organischen Phase benötigt, was zu einer langen thermischen Belastung des Produktes führt.

Bei batchweiser Umsetzung der Alkylzinnhalogenide mit den Mercaptocarbonsäureestern sind niedrige Reaktionstemperaturen notwendig. Die Reaktion ist nämlich so stark exotherm, dass die Dosierung der Base nur so schnell erfolgen kann, wie sie die Wärmeabfuhr durch den Kesselmantel erlaubt, was im Produktionsmassstab lange Reaktionszeiten und damit geringere Raum-Zeit-Ausbeute bedeutet. Ausserdem liegt zu Beginn der Base-Dosierung der pH-Wert der Reaktionsmischung im stark sauren Bereich (pH unter 1) und steigt danach allmählich bis zum neutralen Bereich. Während der Umsetzung im sauren Bereich kann es dabei zu unerwünschten Verseifungsreaktionen, beispielsweise der Mercaptocarbonsäureester, kommen, welche die Produktequalität beeinträchtigen. Zusätzlich hat die bisherige Produktionserfahrung gezeigt, dass bei batchweiser Fahrweise der End-pH-Wert genau einzustellen ist, so dass nur bei einem hohen Ueberwachungsgrad eine gleichmässige Produktion gewährleistet ist. Ueberschreitungen des pH-Wertes führen zu minderer Produktequalität sowie Produkteverlust.

Für die Umsetzung von Alkylzinnoxiden mit beispielsweise Mercaptoglykolsäureestern ist die technisch aufwendige Zwischenisolierung und Trocknung der Alkylzinnoxide notwendig. Auch das in der DE-AS 2 209 336 beschriebene kontinuierliche Verfahren bringt keine Vorteile, da der angewendete Dünnschichtprozess eine aufwendige Reaktionsapparatur benötigt.

Die Aufgabe der Erfindung bestand nun darin, ein kontinuierliches Herstellungsverfahren von Alkylzinnmercaptocarbonsäureestern zu schaffen, welches eine Umsetzung der Reaktanden in einer einfachen Reaktionsapparatur mit kurzen Verweilzeiten, bei einem konstanten pH-Wert, in einem grösseren Temperaturbereich, gegebenenfalls ohne Abkühlung bzw. Abführung der Reaktions- und Neutralisationswärme ermöglicht und damit die geschilderten Nachteile der bekannten Verfahrensarten beseitigt.

Die vorliegende Erfindung betrifft ein Verfahren zur Herstellung von Alkylzinnmercaptocarbonsäureestern aus Alkylzinnhalogeniden und Mercaptocarbonsäureestern in Gegenwart eines Säureakzeptors, das dadurch gekennzeichnet ist, dass die Umsetzung in Abwesenheit eines organischen Lösungsmittels in einer Reaktionsapparatur bestehend aus zwei Rührkesseln durch kontinuierliche Fahrweise bei einer durchschnittlichen Verweilzeit von 1 bis 60 Minuten, bei einem konstanten pH-Wert im Bereich von 3 bis 8, und einem Temperaturbereich von 40 bis 80 °C durchgeführt wird.

Ueberraschenderweise hat sich gezeigt, dass nur bei einer kontinuierlichen Fahrweise im Gegensatz zur diskontinuierlichen Umsetzung keine Beeinträchtigung durch höhere Temperaturen eintritt, da das Produkt nur kurzzeitig und bei einem konstanten pH-Wert, vorzugsweise im neutralen Bereich, höheren Temperaturen ausgesetzt ist. So lassen sich Produkte im kontinuierlichen Betrieb, beispielsweise bei 75°

und pH 6,5, ohne Qualitätseinbusse und bei wesentlich höherer Raum-Zeit-Ausbeute herstellen. Ausserdem lässt sich der gewünschte pH-Bereich während der ganzen Reaktion problemlos einstellen.

Die Verweilzeit im ersten Kessel soll zwischen 1 und 60 Minuten, vorzugsweise 1 bis 10 Minuten, insbesondere aber 1 bis 5 Minuten, betragen. Die Kessel können gleich gross sein oder unterschiedliche Grössen haben. Es ergeben sich damit entsprechende Veränderungen der Verweilzeiten in den einzelnen Reaktoren.

Die Umsetzungstemperatur liegt zwischen 40 und 80 °C, vorzugsweise 50 bis 60 °C.

Durch geeignete Temperaturauswahl der Ausgangsprodukte bei Eintritt in die Reaktionskesselapparatur ist auch möglich, eine adiabatische Fahrweise der Reaktion durchzuführen. Hierfür werden die Ausgangsprodukte bei tiefer Temperatur, vorzugsweise bei einer Temperatur von 20 bis 30 °C kontinuierlich zudosiert. Die Reaktions- und Neutralisationswärme braucht nicht abgeführt zu werden. Daraus resultiert Einsparung von Kühlenergie.

Bei der erfindungsgemässen kontinuierlichen Fahrweise wird ausserdem während der gesamten Umsetzung in einem pH-Bereich zwischen 3 und 8, vorzugsweise bei einem konstanten pH-Wert zwischen 5 und 7 gearbeitet. Der pH-Wert lässt sich in einfacher Weise, beispielsweise durch einen pH-Regler, mittels Basen einstellen.

Als Basen kommen folgende Verbindungen in Frage : Alkali- und Erdalkalihydroxide wie Natrium-, Kalium- oder Kalziumhydroxid, Erdalkalioxide wie Kalziumoxid, ferner Ammoniak, oder Alkalikarbonate wie Natrium- oder Kaliumkarbonate. Sie werden vorzugsweise als 10 bis 50%ige Lösungen eingesetzt. Besonders vorteilhaft hierfür ist beispielsweise eine 18 bis 20%ige Natronlauge.

Gegebenenfalls können aber auch tertiäre Amine wie Triethylamin oder Pyridin eingesetzt werden.

Nach dem erfindungsgemässen Verfahren können verschiedenen Alkylzinnmercaptocarbonsäureester hergestellt werden. Besonders interessant sind Verbindungen der Struktur

$$R_xSn[S(CH_2)_nCOOR']_{4-x},$$

worin x und n die Zahl 1 oder 2, R Methyl, Butyl, Octyl, Lauryl oder die Gruppe $—CH_2CH_2COO—n—C_4H_9$, und R' eine Alkylgruppe mit 8 bis 16 Kohlenstoffatomen bedeuten.

Stellt R Butyl dar, so handelt es sich dabei um n-Butyl, iso-Butyl oder tert-Butyl, insbesondere aber um n-Butyl.

Stellt R Octyl dar, so handelt es sich beispielsweise um n-Octyl oder 2-Aethylhexyl, insbesondere aber um n-Octyl.

Beispiele für R' sind geradkettiges oder verzweigtes Octyl, Decyl, Dodecyl, Tetradecyl und Hexadecyl.

Als Ausgangsprodukte für das Verfahren werden Alkylzinnhalogenide und Mercaptocarbonsäureester eingesetzt.

Als Alkylzinnhalogenide werden die Chloride, Bromide oder Iodide verwendet, vorzugsweise aber die Alkylzinnchloride oder -bromide in einer Menge zwischen 85 und 115 Mol-%, bezogen auf die Mercaptocarbonsäureester, eingesetzt.

Die Mercaptocarbonsäureester stellen bekannte Verbindungen dar. Besonders interessant sind die Mercaptoglykolsäureester und Mercaptopropionsäureester.

Das Anfahren der kontinuierlich betriebenen Reaktion erfolgt zweckmässig ansatzweise, wonach man zuerst mit der Zugabe der Reagenzien beginnt, dann durch Zudosierung der wässrigen Base-Lösung den gewünschten pH-Bereich einstellt und schliesslich das kontinuierliche Zudosieren beider Reaktionskomponenten sowie der Base-Lösung.

Die Ausgangsprodukte Alkylzinnhalogenide und Mercaptocarbonsäureester können entweder als Vormischung bei 20-30 °C im Kessel zudosiert werden, oder aber auch getrennt in den Rührkessel bei verschiedenen Temperaturen eindosiert werden.

Das Verfahren der Erfindung kann beispielsweise in der im folgenden beschriebenen Weise durchgeführt werden.

Es werden in den ersten Reaktor das bzw. die entsprechenden Alkylzinnchloride und der entsprechende Mercaptocarbonsäureester zum Anfahren der Reaktion im geforderten Molverhältnis gepumpt, bis der Reaktor etwa zur Hälfte gefüllt ist. Unter Rühren wird nun eine wässrige Base-Lösung zudosiert, bis der gewünschte pH-Wert erreicht ist. Nach Erreichen des pH-Wertes beginnt man mit dem kontinuierlichen Zudosieren der Natronlauge, des bzw. der Alkylzinnchloride und des Mercaptocarbonsäureesters. Nach Erreichen des eingestellten Füllvolumens wird das Reaktionsgemisch in den zweiten Reaktor gepumpt, so dass das eingestellte Füllvolumen im zweiten Rührkessel aufrechterhalten wird.

Nach einer durchschnittlichen Verweilzeit von 1 bis 60 Minuten, vorzugsweise 1 bis 10 Minuten, insbesondere aber 1 bis 5 Minuten, wird das Reaktionsgemisch zur Abtrennung der organischen Phase von der wässrigen Phase aus dem Reaktionskessel kontinuierlich ausgetragen.

Die Abtrennung des Wassers vom aus dem Reaktionskessel abgezogenen Reaktionsgemisch erfolgt vorzugsweise durch einen kontinuierlich betriebenen Flüssig-Flüssig-Extraktor oder aber auch durch geeignete Trennsäulen.

Flüssig-Flüssig-Extraktoren sind gängige Trennapparaturen der Verfahrenstechnik. Darüber wird beispielsweise im Ullmann, Enzyklopädie der technischen Chemie, Bd. 2, 4. Auflage (1972) auf Seite 553

für die einzelnen Extraktionsverfahren und auf Seiten 560-564 für die einzelnen Apparate bzw. Extraktoren referiert. Besonders vorteilhaft für die Abtrennung des Wassers vom aus dem Reaktionskessel abgezogenen Reaktionsgemisch ist der kontinuierlich betriebene Flüssig-Flüssig-Zentrifugalextraktor, vorzugsweise bei 40-50 °C.

Die Trocknung der so isolierten Produkte-Phase kann zweckmässig auch kontinuierlich erfolgen, beispielsweise durch kontinuierliche Zerstäubungs- oder Sprühtrocknung oder aber auch mit Hilfe eines Dünnschicht- oder Fallfilm-Verdampfers.

Zerstäubungs- und Sprühtrocknung, Dünnschicht- oder Fallfilm-Verdampfer sind ebenfalls bekannte Trocknungsverfahren bzw. Verdampferbauarten. Derartige Apparaturen sind beispielsweise im Ullmann, Enzyklopädie der technischen Chemie, Bd. 2, 4. Auflage (1972), auf Seiten 712-713 für die Zerstäubungs- und Sprühtrockner und auf Seiten 655-656 für die Dünnschicht- und Fallfilmverdampfer beschrieben.

Die folgenden Beispiele erläutern die Erfindung weiter.

## Beispiel 1

In eine Reaktionsapparatur, bestehend aus einer Kesselkaskade von zwei Reaktionskesseln, jeder ausgestattet mit Rührer, Niveauregler, pH-Regler und Temperaturmessgerät, werden bei einer Temperatur von 60 °C kontinuierlich 100 Gew.-Teile eines Gemisches von 30 Mol.-% Mono-n-octylzinntrichlorid und 70 Mol.-% Di-n-octylzinndichlorid zusammen mit 104 Gew.-Teilen Thioglykolsäure-2-äthylhexylester gepumpt. Gleichzeitig wird eine wässrige Natronlauge unter kräftigem Rühren der Reaktionsmasse so zudosiert, dass im ersten Reaktionskessel ein pH-Wert von 6,5-7,0 aufrechterhalten wird. Die Dosierung der Natronlauge wird durch den pH-Regler im ersten Reaktionskessel gesteuert. Ueber den Niveauregler gesteuert wird die Reaktionsmasse in den zweiten Reaktor gepumpt. Zulauf und Ablauf des Reaktionsgemisches sind so geregelt, dass die Verweilzeit der Reaktionsmasse im ersten Reaktionskessel 5 Minuten beträgt.

Die bei der Umsetzung freiwerdende Reaktionswärme wird so abgeführt, dass eine konstante Temperatur von 60 °C im ersten und im zweiten Reaktionskessel aufrechterhalten wird.

Im zweiten Reaktor wird, über den pH-Regler gesteuert, ebenfalls wässrige Natronlauge (sehr wenig) zudosiert, um einen konstanten pH-Wert von 6,9 zu erhalten. Von diesem Reaktionskessel wird die Reaktionsmasse in einen Flüssig-Flüssig-Extraktor gepumpt. Im Extraktor wird kontinuierlich die die Salzlast tragende wässrige Phase vom Produkt abgetrennt. Das Produkt wird anschliessend noch sprühgetrocknet und klarfiltriet. Man erhält eine viskose Flüssigkeit bestehend aus einem Gemisch von 30 Mol-% Mono-n-octylzinn-tris-thiolglykolsäure-2-äthylhexylester und 70 Mol-% Di-n-octylzinn-bis-thiolglykolsäure-2-äthylhexylester.

Die Ausbeute beträgt 98 % der Theorie bezogen auf die beiden eingesetzten Mono- und Dioctylzinnchloride.

Analysedaten : Sn : theoretisch 15,5 % ; S : 9,0 %.
Gefunden Sn : 15,2 % ; S : 8,9 %.

## Beispiel 2

In eine Reaktionsapparatur, bestehend aus einer Kesselkaskade von zwei Reaktionskesseln, jeder ausgestattet mit Rührer, Niveauregler, pH-Regler und Thermometer werden bei einer Temperatur von 30 °C kontinuierlich 100 Gew.-Teile Mono-n-butylzinntrichlorid und 307 Gew.-Teile Thiolglykolsäuretetradecylester gepumpt. Ueber einen pH-Regler gesteuert, wird eine wässrige Natronlauge so dem ersten Kessel zudosiert, dass dort ein pH-Wert von ca. 5,0 aufrechterhalten wird. Ueber den Niveauregler gesteuert wird die Reaktionsmasse in den zweiten Reaktor gepumpt. Zulauf und Ablauf sind so geregelt, dass die Verweilzeit der Reaktionsmasse im ersten Kessel 2 Minuten beträgt.

Die entstehende Reaktionswärme wird so abgeführt, dass die Temperatur im ersten und im zweiten Reaktionskessel 50 °C nicht überschreitet.

Im zweiten Reaktor wird, über den pH-Regler gesteuert, ebenfalls wässrige Natronlauge zudosiert, um einen konstanten pH-Wert von 5,0 zu erhalten.

Vom zweiten Reaktionskessel pumpt man die Reaktionsmasse in einen kontinuierlich arbeitenden Flüssig-Flüssig-Extraktor, der die Wasserphase von der Produktphase abtrennt. Die Produktphase wird anschliessend sprühgetrocknet und klarfiltriert. Man erhält eine viskose Flüssigkeit der Formel n-$C_4H_9Sn(SCH_2COOC_{14}H_{29})_3$.

Die Ausbeute beträgt 96 % der Theorie, bezogen auf das eingesetzte Mono-n-butylzinntrichlorid.

Analysedaten : Sn : theoretisch 11,4 % ; S : 9,3 %.
Gefunden Sn : 11,2 % ; S : 9,1 %.

## Beispiel 3

Ein vorgefertigtes Gemisch aus 100 Gew.-Teilen Di-n-octylzinndichlorid und 98 Gew.-Teilen Thiolglykolsäure-2-äthylhexylester wird bei Raumtemperatur kontinuierlich in eine Reaktionsapparatur, bestehend aus einer Kesselkaskade von zwei Reaktionskesseln, jeder ausgestattet mit Rührer, Niveauregler,

pH-Regler und Temperaturmessgerät gepumpt. Gleichzeitig wird eine wässrige Natronlauge unter kräftigem Rühren der Reaktionsmasse so zudosiert, dass im ersten Reaktionskessel ein pH-Wert von 6,5-7,0 aufrechterhalten wird. Die Dosierung der Natronlauge wird durch den pH-Regler im ersten Reaktionskessel gesteuert. Die bei der Umsetzung freiwerdende Reaktionswärme wird nicht abgeführt. Die Reaktionstemperatur beträgt 65 °C. (Die Temperatur wird durch adiabatische Fahrweise festgelegt und ist abhängig von der Temperatur des Ausgangsgemisches aus Dioctylzinndichlorid und Thiolglykolsäure-2-äthylhexylester). Ueber den Niveauregler gesteuert wird die Reaktionsmasse in den zweiten Reaktor gepumpt. Zulauf und Ablauf des Reaktionsgemisches sind so geregelt, dass die Verweilzeit der Reaktionsmasse im ersten Reaktionskessel 5 Minuten beträgt.

Im zweiten Reaktor wird, über den pH-Regler gesteuert, ebenfalls wässrige Natronlauge (sehr wenig) zudosiert, um einen konstanten pH-Wert von 6,9 zu erhalten. Von diesem Reaktionskessel wird die Reaktionsmasse in einen Flüssig-Flüssig-Extraktor gepumpt. Im Extraktor wird kontinuierlich die die Salzlast tragende wässrige Phase vom Produkt abgetrennt. Das Produkt wird anschliessend noch sprühgetrocknet und klarfiltriert.

Man erhält eine viskose Flüssigkeit bestehend aus Di-n-octylzinn-bis-thiolglykolsäure-2-äthylhexylester.

Die Ausbeute beträgt 97 % der Theorie, bezogen auf das eingesetzte Di-n-octylzinndichlorid.

Analysedaten : theoretisch : Sn : 15,8 %; S : 8,5 %.
gefunden : Sn : 15,7 % ; S : 8,3 %.

**Patentansprüche**

1. Verfahren zur Herstellung von Alkylzinnmercaptocarbonsäureestern aus Alkylzinnhalogeniden und Mercaptocarbonsäureestern in Gegenwart eines Säureakzeptors, dadurch gekennzeichnet, dass die Umsetzung in Abwesenheit eines organischen Lösungsmittels in einer Reaktionsapparatur bestehend aus zwei Rührkesseln durch kontinuierliche Fahrweise bei einer durchschnittlichen Verweilzeit von 1 bis 60 Minuten, bei einem konstanten pH-Wert im Bereich von 3 bis 8 und einem Temperaturbereich von 40 bis 80 °C durchgeführt wird.

2. Verfahren nach Anspruch 1, dadurch gekennzeichnet, dass die Umsetzung in der Reaktionsapparatur bei einer Verweilzeit von 1 bis 10 Minuten durchgeführt wird.

3. Verfahren nach Anspruch 1, dadurch gekennzeichnet, dass die Umsetzung in der Reaktionsapparatur bei einem pH-Wert zwischen 5 und 7 durchgeführt wird.

4. Verfahren nach Anspruch 1, dadurch gekennzeichnet, dass die Umsetzung in der Reaktionsapparatur bei einer Temperatur von 50-60 °C durchgeführt wird.

5. Verfahren nach Anspruch 1, dadurch gekennzeichnet, dass die eingesetzten Rohstoffe bei Eintritt in die Reaktionsappatur eine Temperatur von 20-30 °C besitzen und die Reaktion selbst adiabatisch durchgeführt wird.

6. Verfahren nach Anspruch 1, dadurch gekennzeichnet, dass das aus der Reaktionsapparatur abgezogene Produkt von der wässrigen Phase abgetrennt und anschliessend getrocknet wird.

7. Verfahren nach Anspruch 6, dadurch gekennzeichnet, dass die aus der Reaktionsapparatur abgezogene Produkte-Phase durch einen kontinuierlich betriebenen Flüssig-Flüssig-Extraktor oder eine Trennsäule von der wässrigen Phase abgetrennt wird.

8. Verfahren nach Anspruch 6, dadurch gekennzeichnet, dass die aus der Reaktionsapparatur abgezogenen Produkte-Phase durch einen kontinuierlich betriebenen Flüssig-Flüssig-Zentrifugalextraktor von der wässrigen Phase abgetrennt wird.

9. Verfahren nach Anspruch 6, dadurch gekennzeichnet, dass die Trocknung der Produkte-Phase durch kontinuierliche Zerstäubungs- oder Sprühtrocknung, oder mit Hilfe eines Dünnschicht- oder Fallfilm-Verdampfers durchgeführt wird.

10. Verfahren nach Anspruch 1, dadurch gekennzeichnet, dass Alkylzinnmercaptocarbonsäureester der Formel

$$R_xSn[S(CH_2)_nCOOR']_{4-x}$$

aus den entsprechenden Alkylzinnhalogeniden und den entsprechenden Mercaptocarbonsäureestern hergestellt werden, worin x und n die Zahl 1 oder 2, R Methyl, Butyl, Octyl, Lauryl oder die Gruppe $-CH_2CH_2COO\text{-}n\text{-}C_4H_9$, R' eine Alkylgruppe mit 8 bis 16 Kohlenstoffatomen bedeuten, und der Begriff Halogenid für Chlorid, Bromid oder lodid steht.

**Claims**

1. A process for the production of alkyltin mercaptocarboxylic acid esters from alkyltin halides and mercaptocarboxylic acid esters in the presence of an acid acceptor, which process comprises carrying out the reaction, in the absence of an organic solvent, continuously in a reaction system comprising two

agitator vessels with an average dwell time of 1 to 60 minutes, at a constant pH value in the range from 3 to 8, and in a temperature range from 40° to 80 °C.

2. A process according to claim 1, wherein the reaction is carried out in the reaction system with a dwell time of 1 to 10 minutes.

3. A process according to claim 1, wherein the reaction is carried out in the reaction system at a pH from 5 to 7.

4. A process according to claim 1, wherein the reaction is carried out in the reaction system in the temperature range from 50° to 60 °C.

5. A process according to claim 1, wherein the starting materials are fed into the reaction system at a temperature of 20° to 30 °C and the reaction itself is carried out adiabatically.

6. A process according to claim 1, wherein the product drawn off from the reaction system is separated from the aqueous phase and subsequently dried.

7. A process according to claim 6, wherein the product phase drawn off from the reaction system is separated from the aqueous phase by a continuously operating liquid-liquid extractor or a separating column.

8. A process according to claim 6, wherein the product phase drawn off from the reaction system is separated from the aqueous phase by a continuously operating liquid-liquid centrifugal extractor.

9. A process according to claim 6, wherein the product phase is dried by continuous spray drying or with the aid of a thin-film or falling film evaporator.

10. A process according to claim 1, wherein alkyltin mercaptocarboxylic acid esters of the formula

$$R_xSn[S(CH_2)_nCOOR']_{4-x}$$

wherein x and n are 1 or 2, R is methyl, butyl, octyl, lauryl or the $-CH_2CH_2COO\text{-}n\text{-}C_4H_9$ group, and R' is a $C_8$-$C_{16}$alkyl group, are prepared from the corresponding alkyltin halides and the corresponding mercaptocarboxylic acid esters, the term halide denoting chloride, bromide or iodide.

**Revendications**

1. Procédé de préparation d'esters d'acides alkylétain-mercapto-carboxyliques à partir d'halogénures d'alkylétains et d'esters d'acides mercapto-carboxyliques, en présence d'un accepteur d'acides, procédé caractérisé en ce qu'on effectue la réaction sans solvant organique, dans un appareil constitué de deux récipients équipés chacun d'un agitateur, selon le mode opératoire en continu, avec un temps de séjour moyen de 1 à 60 minutes, à un pH constant compris entre 3 et 8 et dans un intervalle de température allant de 40 à 80 °C.

2. Procédé selon la revendication 1, caractérisé en ce que la réaction dans l'appareil réactionnel est effectuée avec un temps de séjour de 1 à 10 minutes.

3. Procédé selon la revendication 1, caractérisé en ce que la réaction dans l'appareil réactionnel est effectuée à un pH compris entre 5 et 7.

4. Procédé selon la revendication 1, caractérisé en ce que la réaction dans l'appareil réactionnel est effectuée à une température de 50 à 60 °C.

5. Procédé selon la revendication 1, caractérisé en ce que les matières de départ mises en jeu sont, à leur entrée dans l'appareil réactionnel, à une température de 20 à 30 °C et en ce que la réaction elle-même est effectuée adiabatiquement.

6. Procédé selon la revendication 1, caractérisé en ce que le produit retiré de l'appareil réactionnel est séparé de la phase aqueuse, puis est séché.

7. Procédé selon la revendication 6, caractérisé en ce que la phase « produits » retirée de l'appareil réactionnel est séparée de la phase aqueuse au moyen d'un extracteur liquide-liquide fonctionnant en continu ou au moyen d'une colonne de séparation.

8. Procédé selon la revendication 6, caractérisé en ce que la phase « produits » retirée de l'appareil réactionnel est séparée de la phase aqueuse au moyen d'un extracteur centrifuge liquide-liquide fonctionnant en continu.

9. Procédé selon la revendication 6, caractérisé en ce que le séchage de la phase « produits » est effectuée par pulvérisation ou atomisation ou au moyen d'un évaporateur à couche mince ou à pellicule tombante.

10. Procédé selon la revendication 1, caractérisé en ce qu'on prépare des esters d'acides alkylétain-mercapto-carboxyliques répondant à la formule suivante :

$$R_xSn[S(CH_2)_nCOOR']_{4-x}$$

dans laquelle x et n représentent chacun le nombre 1 ou le nombre 2, R représente un radical méthyle, butyle, octyle ou lauryle ou le radical $-CH_2CH_2COO\text{-}n\text{-}C_4H_9$, et R' représente un radical alkyle contenant de 8 à 16 atomes de carbone, à partir des halogénures d'alkyl-étains correspondants et des esters d'acides mercapto-carboxyliques correspondants, les halogénures en question étant des chlorures, des bromures ou des iodures.